# EUROPÄISCHE PATENTSCHRIFT

(11) **EP 3 049 692 B1**
(45) Veröffentlichungstag und Bekanntmachung des Hinweises auf die Patenterteilung: **29.11.2017**
(21) Anmeldenummer: 14789511.4
(22) Anmeldetag: 08.09.2014
(51) Int. Cl.: F16F 15/14

(54) **DREHMOMENTÜBERTRAGUNGSEINRICHTUNG**
TORQUE TRANSMISSION DEVICE
DISPOSITIF DE TRANSMISSION DE COUPLE

(30) Priorität: 26.09.2013 DE 102013219429
(43) Veröffentlichungstag der Anmeldung: 03.08.2016
(73) Patentinhaber: Schaeffler Technologies AG & Co. KG, 91074 Herzogenaurach (DE)
(72) Erfinder: MAIENSCHEIN, Stephan, 76534 Baden-Baden (DE)
(86) Internationale Anmeldenummer: PCT/DE2014/200450
(87) Internationale Veröffentlichungsnummer: WO 2015/043592

(56) Entgegenhaltungen:
- DE-A1-102009 051 724
- DE-A1-102010 049 553

## Beschreibung

Die Erfindung betrifft eine Drehmomentübertragungseinrichtung gemäß den Merkmalen des Patentanspruchs 1.

Es sind beispielsweise aus DE 10 2008 057 648 A1, Drehmomentübertragungseinrichtungen mit einem Federdämpfer, einem Fliehkraftpendel und einer Wandlerkupplung bekannt. Die Drehmomentübertragungseinrichtung ist dabei ausgebildet, ein Drehmoment von einem Verbrennungsmotor kommend an ein Getriebe weiterzuleiten und dabei Drehmomentschwankungen im Drehmoment auszugleichen. Dadurch kann der Antriebsstrang besonders geräuscharm ausgebildet werden und gleichzeitig die Möglichkeit eröffnet werden, Verbrennungsmotoren mit niedriger Drehzahl zu betreiben. Dadurch kann der Kraftstoffverbrauch des Verbrennungsmotors reduziert werden. Besonders bei Verbrennungsmotoren mit Zylinderabschaltung können durch die Drehmomentübertragungseinrichtungen im fahrbaren Bereich des Verbrennungsmotors zu ungünstige Eigenformen in der Drehmomentübertragungseinrichtung angeregt werden, die den Fahrkomfort nachteilig beeinflussen können.

In der DE 10 2009 051 724 A1, welche die Merkmale des Oberbegriffs des Anspruchs 1 zeigt, und der DE 10 2010 049 553 A1 sind jeweils ein Fliehkraftpendel mit einer Schalteinrichtung offenbart.

Es ist Aufgabe der Erfindung, eine verbesserte Drehmomentübertragungseinrichtung bereitzustellen.

Diese Aufgabe wird mittels einer Drehmomentübertragungseinrichtung gemäß Patentanspruch 1 gelöst. Vorteilhafte Ausführungsformen sind in den abhängigen Ansprüchen angegeben.

Erfindungsgemäß wurde erkannt, dass eine verbesserte Drehmomentübertragungseinrichtung dadurch bereitgestellt werden kann, dass die Drehmomentübertragungseinrichtung einen Federdämpfer und ein Fliehkraftpendel umfasst. Die Drehmomentübertragungseinrichtung ist drehbar um eine Drehachse gelagert. Das Fliehkraftpendel umfasst einen Pendelflansch und wenigstens eine Pendelmasse. Die Pendelmasse ist mittels einer Kulissenführung mit dem Pendelflansch verbunden. Die Kulissenführung gibt eine Pendelbahn vor. Die Pendelmasse ist ausgebildet, entlang der Pendelbahn zu pendeln. Der Pendelflansch ist mit dem Federdämpfer drehmomentschlüssig verbunden. Der Federdämpfer ist ausgebildet, ein Drehmoment zu übertragen. Ferner ist eine Schalteinrichtung vorgesehen, wobei die Schalteinrichtung mit dem Federdämpfer gekoppelt ist. Die Schalteinrichtung ist ausgebildet, bei einem Überschreiten eines vordefinierten Schwellenwerts des Drehmoments die Pendelbewegung der Pendelmasse entlang der Pendelbahn zumindest teilweise zu reduzieren.

Diese Ausgestaltung hat den Vorteil, dass ein zusätzlicher Freiheitsgrad zur Auslegung der Drehmomentübertragungseinrichtung bereitgestellt werden kann, so dass beispielsweise Drehzahlbereiche oder Drehmomentbereiche, in denen das Fliehkraftpendel zur Schwingung in ungünstigen Eigenformen angeregt werden kann, vermieden werden können. Dadurch eignet sich die Drehmomentübertragungseinrichtung besonders für Verbrennungsmotoren mit Zylinderabschaltung.

In einer weiteren Ausführungsform weist der Federdämpfer ein Eingangsteil, einen Energiespeicher und ein Ausgangsteil auf. Das Ausgangsteil ist mittels des Energiespeichers verdrehbar um die Drehachse mit dem Eingangsteil gekoppelt. Ferner sind das Eingangsteil und das Ausgangsteil mit der Schalteinrichtung gekoppelt.

In einer weiteren Ausführungsform umfasst die Schalteinrichtung eine Steuerscheibe und ein Betätigungselement, wobei die Steuerscheibe gegenüber dem Betätigungselement verdrehbar um die Drehachse angeordnet ist.

In einer weiteren Ausführungsform ist die Steuerscheibe mit dem Eingangsteil und das Betätigungselement mit dem Ausgangsteil verbunden. Alternativ ist die Steuerscheibe mit dem Ausgangsteil und das Betätigungselement mit dem Eingangsteil gekoppelt. Diese Ausgestaltung hat den Vorteil, dass bei einer Verdrehung des Eingangsteils gegenüber dem Ausgangsteil gleichzeitig die Steuerscheibe gegenüber dem Betätigungselement verdreht wird. Die Verdrehung des Eingangsteils gegenüber dem Ausgangsteil ist dabei abhängig von der Höhe des über den Federdämpfer zu übertragenden Drehmoments.

In einer weiteren Ausführungsform umfasst das Betätigungselement auf einer der Steuerscheibe zugewandten Stirnseite einen in Umfangsrichtung verlaufenden ersten Rampenabschnitt und die Steuerscheibe auf einer dem Betätigungselement zugewandten Stirnseite einen in Umfangsrichtung verlaufenden zweiten Rampenabschnitt, wobei bei Überschreiten des vordefinierten Schwellenwerts des Drehmoments der erste Rampenabschnitt und der zweite Rampenabschnitt ausgebildet sind, in Berührkontakt gebracht zu werden. Die Steuerscheibe ist ausgebildet, bei dem Berührkontakt des ersten Rampenabschnitts mit dem zweiten Rampenabschnitt zumindest teilweise axial in Richtung der Pendelmasse bewegt zu werden, um in Reibkontakt mit der Pendelmasse zu treten und eine Pendelbewegung der Pendelmasse zumindest teilweise zu reduzieren. Dadurch kann das Tilgerverhalten des Fliehkraftpendels in Abhängigkeit des über die Drehmomentübertragungseinrichtung zu übertragenden Drehmoments adaptiert werden. Insbesondere kann es zu- oder abgeschaltet werden.

In einer weiteren Ausführungsform weist das Betätigungselement einen ersten Ringabschnitt und einen zweiten Ringabschnitt auf. Die beiden Ringabschnitte sind senkrecht in einer Ebene zu der Drehachse angeordnet. Der erste Ringabschnitt ist axial zu dem zweiten Ringabschnitt versetzt angeordnet. In Umfangsrichtung ist zwischen dem ersten Ringabschnitt und dem zweiten Ringabschnitt der Rampenabschnitt angeordnet. Diese Ausgestaltung ermöglicht eine besonders kostengünstige Herstellung des Betätigungselements mittels eines Stanzbiegeverfahrens.

In einer weiteren Ausführungsform weist die Steuerscheibe einen ersten Steuerscheibenabschnitt und einen zweiten Steuerscheibenabschnitt auf. Die beiden Steuerscheibenabschnitte sind einer Ebene senkrecht zu der Drehachse angeordnet. Der erste Steuerscheibenabschnitt ist axial zu dem zweiten Steuerscheibenabschnitt versetzt angeordnet. Die Steuerscheibe ist derart zu dem Betätigungselement angeordnet, dass vor Überschreiten des vordefinierten Schwellenwerts der erste Steuerscheibenabschnitt an dem ersten Ringabschnitt und der zweite Ringabschnitt an dem zweiten Steuerscheibenabschnitt anliegt.

In einer weiteren Ausführungsform ist der erste Rampenabschnitt und/oder der zweite Rampenabschnitt schräg in einem spitzen Winkel gegenüber dem ersten und/oder zweiten Ringabschnitt und/oder dem ersten und/oder zweiten Steuerscheibenabschnitt angeordnet. Vorzugsweise weist der Winkel 5° bis 30°, insbesondere 10° bis 20° auf. Dadurch wird gewährleistet, dass die Rampenabschnittsflächen aneinander gleiten können und gleichzeitig eine hohe Verspannkraft zum Abbremsen der Pendelmasse bereitgestellt werden kann.

In einer weiteren Ausführungsform weist die Steuerscheibe auf einer der Pendelmasse zugewandten Seite eine erste Reibfläche und die Pendelmasse auf der der Steuerscheibe zugewandten Seite eine zweite Reibfläche auf, wobei die beiden Reibflächen ausgebildet sind, bei Reibkontakt ein Pendelmoment der Pendelmasse gegenüber dem Federdämpfer abzustützen. Dadurch kann auf einfache Weise das Pendelmoment und somit die Tilgung von Drehmomentschwankungen wirksam reduziert werden.

In einer weiteren Ausführungsform ist zwischen der Steuerscheibe und dem Pendelflansch ein Federelement angeordnet. Das Federelement ist ausgebildet, eine Trennkraft zur axialen Beabstandung der Pendelmasse von der Steuerscheibe bereitzustellen, wobei vorzugsweise das Federelement als Tellerfeder ausgebildet ist. Diese Ausgestaltung hat den Vorteil, dass ein unerwünschtes Reiben der Reibflächen bzw. ein unerwünschter Kontakt der Steuerscheibe an der Pendelmasse zuverlässig vermieden wird.

In einer weiteren Ausführungsform weist die Steuerscheibe einen ersten Steuerscheibenbereich, einen zweiten Steuerscheibenbereich und einen dritten Steuerscheibenbereich auf, wobei die Steuerscheibenbereiche miteinander verbunden sind, wobei der erste Steuerscheibenbereich parallel zu der Drehachse angeordnet ist, wobei der zweite Steuerscheibenbereich in einer Ebene senkrecht zu der Drehachse verlaufend angeordnet ist, wobei radial außenseitig der dritte Steuerscheibenbereich angrenzend am zweiten Steuerscheibenbereich angeordnet ist, wobei der dritte Steuerscheibenbereich in einer Ebene senkrecht zu der Drehachse und axial versetzt zu dem zweiten Steuerscheibenbereich angeordnet ist, wobei der dritte Steuerscheibenbereich axial zwischen dem zweiten Steuerscheibenbereich und der Pendelmasse angeordnet ist. Dadurch kann vermieden werden, dass der zweite Steuerscheibenbereich, in dem der zweite Rampenabschnitt angeordnet ist, in Berührkontakt mit der Pendelmasse tritt.

Nachfolgend wird die Erfindung anhand von Figuren näher erläutert. Dabei zeigen:
- Figur 1: einen Längsschnitt durch eine Drehmomentübertragungseinrichtung;
- Figur 2: einen vergrößerten Ausschnitt des in Figur 1 gezeigten Längsschnitts der Drehmomentübertragungseinrichtung;
- Figur 3: eine Schnittansicht entlang einer in Figur 1 gezeigten Schnittebene A-A in einem ersten Betriebszustand der Drehmomentübertragungseinrichtung;
- Figur 4: einen Längsschnitt entlang der in Figur 1 gezeigten Schnittebene A-A durch die Drehmomentübertragungseinrichtung in einem zweiten Betriebszustand;
- Figur 5: eine Schnittansicht entlang einer in Figur 2 gezeigten Schnittebene C-C durch die Drehmomentübertragungseinrichtung;
- Figur 6: ein Diagramm eines Momentenverlaufs, aufgetragen über einen Verdrehwinkel; und
- Figur 7: ein Diagramm eines Momentenverlaufs, aufgetragen über dem Verdrehwinkel.

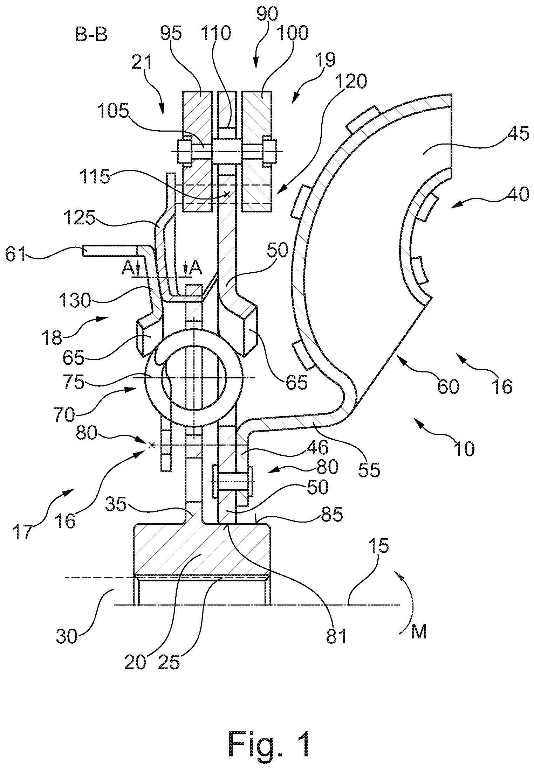

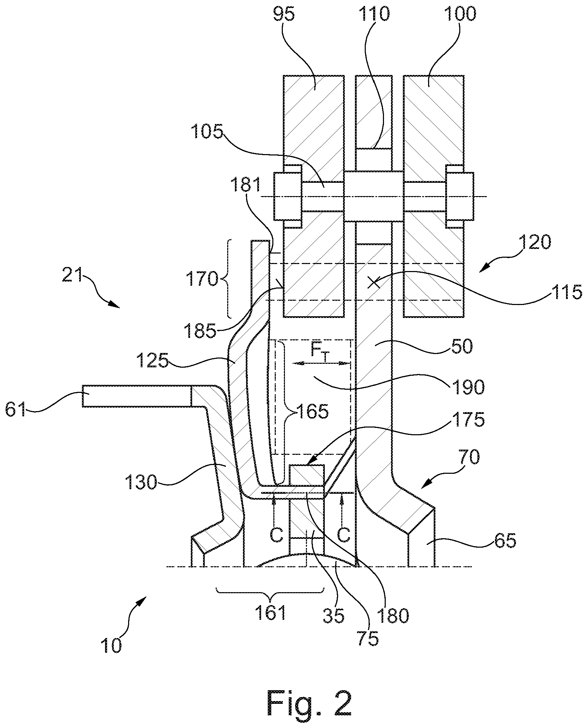

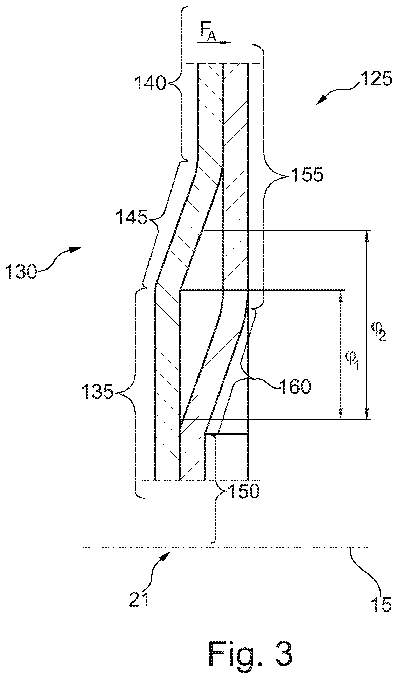

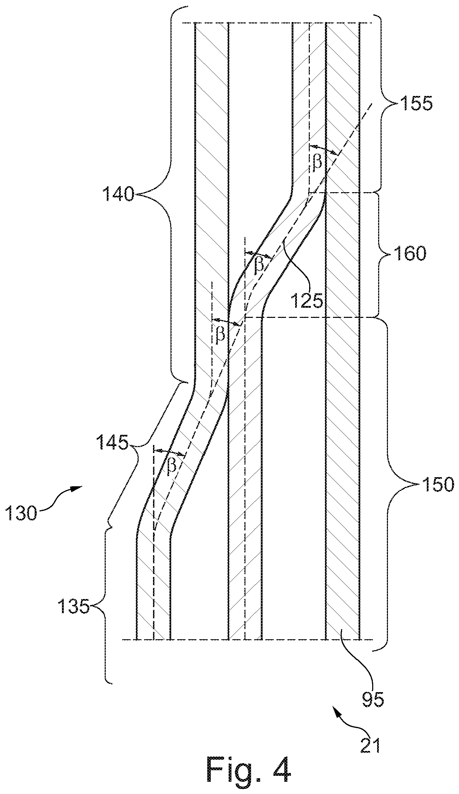

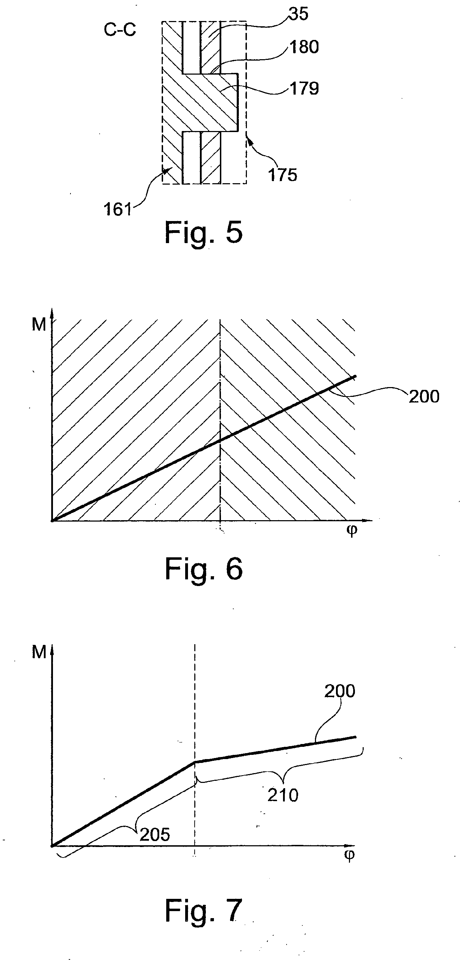

Figur 1 zeigt einen Längsschnitt entlang einer Schnittebene B-B durch eine Drehmomentübertragungseinrichtung 10. Figur 2 zeigt einen vergrößerten Ausschnitt des in Figur 1 gezeigten Längsschnitts der Drehmomentübertragungseinrichtung 10. Figur 3 zeigt einen Ausschnitt einer Schnittansicht entlang einer in Figur 1 gezeigten Schnittebene A-A in einem ersten Betriebszustand und Figur 4 zeigt einen Längsschnitt entlang der in Figur 1 gezeigten Schnittebene A-A durch die Drehmomentübertragungseinrichtung 10 in einem zweiten Betriebszustand. Figur 5 zeigt eine Schnittansicht entlang einer in Figur 2 gezeigten Schnittebene C-C durch die Drehmomentübertragungseinrichtung.

Die Drehmomentübertragungseinrichtung 10 ist drehbar um eine Drehachse 15 gelagert. Die Drehmomentübertragungseinrichtung 10 ist dabei Teil eines Antriebsstrangs eines Kraftfahrzeugs. Die Drehmomentübertragungseinrichtung 10 weist eine Eingangsseite 16 und eine Ausgangsseite 17 auf. Die Eingangsseite 16 kann beispielsweise über einen Fluidstrom mit einer Pumpe eines hydrodynamischen Wandlers 60 verbunden sein. Die Ausgangsseite 17 kann beispielsweise mit einem Getriebe verbunden sein.

Die Drehmomentübertragungseinrichtung 10 umfasst einen Federdämpfer 18, ein Fliehkraftpendel 19 sowie eine Schalteinrichtung 21 auf. An der Ausgangsseite 17 weist die Drehmomentübertragungseinrichtung 10 eine Nabe 20 auf. Die Nabe 20 weist radial innenseitig eine Welle-Nabe-Verbindung 25 auf. Die Welle-Nabe-Verbindung 25 stellt eine drehmomentschlüssige Verbindung zu einer Getriebeeingangswelle 30 des Getriebes bereit. Radial außenseitig der Nabe 20 ist ein Ausgangsteil 35 vorgesehen, das mit der Nabe 20 verbunden ist. Das Ausgangsteil 35 erstreckt sich radial nach außen hin.

Eingangsseitig weist die Drehmomentübertragungseinrichtung 10 ein Eingangsteil 40 auf, das eine Turbine 45 des hydrodynamischen Wandlers 60, einen Pendelflansch 50 des Fliehkraftpendels 19 und eine Eingangsscheibe 61 umfasst. Die Turbine 45 weist einen Turbinenflansch 46 auf. Der Turbinenflansch 46, der Pendelflansch 50 sowie die Eingangsscheibe 61 sind mittels formschlüssiger Verbindungen 80 miteinander verbunden. Axial wird die Position der Turbine 45, des Pendelflanschs 50 sowie der Eingangsscheibe 61 durch das zwischen dem Pendelflansch 50 und der Eingangsscheibe 61 angeordnete Ausgangsteil 35 festgelegt.

Die Eingangsscheibe 61 sowie der Pendelflansch 50 weisen Laschen 65 auf, die einen Retainer 70 ausbilden. Das Ausgangsteil 35 ist in axialer Richtung zwischen der Eingangsscheibe 61 und dem Pendelflansch 50 angeordnet und erstreckt sich radial nach außen hin durch den Retainer 70. Im Retainer 70 ist ein Energiespeicher 75 angeordnet. Der Energiespeicher 75 ist in der Ausführungsform als Bogenfeder ausgebildet und erstreckt sich dabei im Wesentlichen in Umfangsrichtung zu der Drehachse 15. Selbstverständlich ist auch denkbar, dass der Energiespeicher 75 als geradlinig ausgebildete Schraubenfeder ausgebildet sein kann.

Der Pendelflansch 50 ist auf einer dem Ausgangsteil 35 abgewandten Stirnseite mit der Turbine 45 über die formschlüssige Verbindung 80 verbunden. Die formschlüssige Verbindung 80 ist in der Ausführungsform als Nietverbindung ausgebildet. An einer inneren Umfangsfläche 81 des Pendelflanschs 50 liegt dieser an einer äußeren Umfangsfläche 85 an der Nabe 20 an. Dabei ist der Pendelflansch 50 gegenüber der Nabe 20 um die Drehachse 15 verdrehbar. Das Fliehkraftpendel 19 umfasst radial außenseitig an dem Pendelflansch 50 ein Pendelmassenpaar 90. Das Pendelmassenpaar 90 umfasst eine linksseitig des Pendelflanschs 50 angeordnete erste Pendelmasse 95 und eine rechtsseitig des Pendelflanschs 50 angeordnete zweite Pendelmasse 100. Das Pendelmassenpaar 90 weist ferner wenigstens einen Abstandsbolzen 105 zur Verbindung der Pendelmassen 95, 100 miteinander auf. Der Abstandsbolzen 105 ist dabei durch eine erste Ausnehmung 110 des Pendelflanschs 50 geführt. Ferner umfasst das Fliehkraftpendel 19 eine Kulissenführung 120. Die Kulissenführung 120 ist ausgebildet, die Pendelmassen 95, 100 entlang einer vordefinierten Pendelbahn 115 zu führen.

Die Schalteinrichtung 21 ist axial zwischen der Eingangsscheibe 61 und dem Pendelflansch 50 sowie radial außen liegend zum Ausgangsteil 35 angeordnet. Die Schalteinrichtung 21 umfasst eine Steuerscheibe 125 und ein Betätigungselement 130. Das Betätigungselement 130 ist in die Eingangsscheibe 61 integriert.

Das Betätigungselement 130 (vgl. Figuren 3 und 4) umfasst in Umfangsrichtung einen ersten Ringabschnitt 135 und einen zweiten Ringabschnitt 140. Der erste Ringabschnitt 135 und der zweite Ringabschnitt 140 sind jeweils auf einer Ebene, die senkrecht zu der Drehachse 15 angeordnet sind, angeordnet. Der erste Ringabschnitt 135 ist in axialer Richtung versetzt zu dem zweiten Ringabschnitt 140 angeordnet. In Umfangsrichtung ist zwischen dem ersten Ringabschnitt 135 und dem zweiten Ringabschnitt 140 ein erster Rampenabschnitt 145 vorgesehen. Der erste Rampenabschnitt 145 verbindet dabei in Umfangsrichtung den ersten Ringabschnitt 135 mit dem zweiten Ringabschnitt 140. Der erste Rampenabschnitt 145 ist somit schräg zu dem ersten Ringabschnitt 135 bzw. dem zweiten Ringabschnitt 140 angeordnet. Dabei schließt der erste Rampenabschnitt 145 zu dem ersten Ringabschnitt 135 und/oder zweiten Ringabschnitt 140 einen Winkel β ein. Der Winkel β ist spitz ausgebildet. Der Winkel β (vgl. Figur 4) weist vorzugsweise einen Winkelbereich von 5° bis 30°, insbesondere von 10° bis 20° auf.

Die Steuerscheibe 125 weist in Umfangsrichtung einen ersten Steuerscheibenabschnitt 150 und einen zweiten Steuerscheibenabschnitt 155 auf. Der erste Steuerscheibenabschnitt 150 und der zweite Steuerscheibenabschnitt 155 sind jeweils in einer Ebene senkrecht zu der Drehachse 15 angeordnet. Der erste Steuerscheibenabschnitt 150 ist axial versetzt zu dem zweiten Steuerscheibenabschnitt 155. Zwischen dem ersten Steuerscheibenabschnitt 150 und dem zweiten Steuerscheibenabschnitt 155 ist ein zweiter Rampenabschnitt 160 in der Steuerscheibe 125 vorgesehen. Der zweite Rampenabschnitt 160 ist dabei ferner parallel zum ersten Rampenabschnitt 145 angeordnet. Somit ist der zweite Rampenabschnitt 160 ebenso im spitzen Winkel β (vgl. Figur 4) zu dem ersten Steuerscheibenabschnitt 150 und dem zweiten Steuerscheibenabschnitt 155 angeordnet. Der erste Steuerscheibenabschnitt 150 ist somit in Umfangsrichtung über dem zweiten Rampenabschnitt 160 mit dem zweiten Steuerscheibenabschnitt 155 verbunden. Die Steuerscheibe 125 kann beispielsweise mittels eines Stanzbiegeverfahrens kostengünstig hergestellt werden. Dabei können die ersten Steuerscheibenabschnitte 150, 155 und/oder der zweite Rampenabschnitt 160 auf einfache Weise in die Steuerscheibe 125 eingeprägt werden.

Die Steuerscheibe 125 (vgl. Figur 2) weist in radialer Richtung einen ersten Steuerscheibenbereich 161, einen zweiten Steuerscheibenbereich 165 und einen dritten Steuerscheibenbereich 170 auf. Die Steuerscheibenbereiche 161, 165, 170 sind miteinander verbunden. Der erste Steuerscheibenbereich 161 ist dabei parallel zu der Drehachse 15 angeordnet. Der erste Steuerscheibenbereich 160 stellt dabei eine Verbindung 175 zu dem Ausgangsteil 35 bereit.

Für die drehmomentschlüssige, jedoch axial verschiebbare Verbindung 175 weist der erste Steuerscheibenabschnitts 161 einen am freien Ende des Steuerscheibenabschnitts 161 angeordneten Stiftabschnitt 179 auf (vgl. Figur 5). Ferner umfasst die Verbindung 175 im Ausgangsteil 35 eine zweite Ausnehmung 180. Die zweite Ausnehmung 180 ist korrespondierend zum Stiftabschnitt 179 ausgebildet. Der Stiftabschnitt 179 ist in axialer Richtung breiter als das Ausgangsteil 35 ausgebildet, um auch bei einer axialer Verschiebung der Steuerscheibe 125 einen zuverlässigen Eingriff des Stiftabschnitts 179 in die zweite Ausnehmung 180 zu gewährleisten. Zur gleichmäßigen Drehmomentübertragung sind in Umfangsrichtung mehrere Ausnehmungen 180 und Stiftabschnitte 179 vorgesehen. Die zweite Ausnehmung 180 und der Stiftabschnitt 179 sind parallel zu der Drehachse 15 angeordnet. Dadurch kann eine in axialer Richtung verschiebbare aber drehmomentschlüssige Verbindung 175 zwischen der Steuerscheibe 125 und dem Ausgangsteil 35 bereitgestellt werden.

Der zweite Steuerscheibenabschnitt 165 ist rechtwinklig zu dem ersten Steuerscheibenabschnitt 161 angeordnet und erstreckt sich radial vom ersten Steuerscheibenabschnitt 161 nach außen hin. Der zweite Steuerscheibenabschnitt 165 ist etwa auf radialer Höhe des Betätigungselements angeordnet.

Radial außenseitig an den zweiten Steuerscheibenbereich 165 schließt sich der dritte Steuerscheibenbereich 170 an. Der zweite Steuerscheibenbereich 165 und der dritte Steuerscheibenbereich 170 sind in einer Ebene senkrecht zur Drehachse 15 axial zueinander versetzt angeordnet. Der dritte Steuerscheibenbereich 170 ist dabei auf radialer Höhe der Pendelmassen 95, 100 angeordnet. Der dritte Steuerscheibenbereich 170 weist auf einer der ersten Pendelmasse 95 zugewandten Stirnseite eine erste Reibfläche 181 auf. Die erste Pendelmasse 95 weist auf einer dem dritten Steuerscheibenbereich 170 zugewandten Stirnfläche eine zweite Reibfläche 185 auf. Der dritte Steuerscheibenbereich 170 ist in axialer Richtung zwischen dem zweiten Steuerscheibenbereich 165 und der ersten Pendelmasse 95 angeordnet.

Zusätzlich kann zwischen der Steuerscheibe 125 und dem Pendelflansch 50 ein Federelement 190 vorgesehen sein, das ausgebildet ist, eine Trennkraft F_{T} bereitzustellen, um die Steuerscheibe 125 in Richtung des Betätigungselements 130 zu drücken. Die Trennkraft F_{T} ist dabei parallel zur Drehachse 15 ausgerichtet. Das Federelement 190 kann beispielsweise als Tellerfeder ausgebildet sein. Diese Ausgestaltung hat den Vorteil, dass das Federelement 190 besonders kostengünstig und bauraumgünstig ist.

Im Betrieb der Drehmomentübertragungseinrichtung 10 rotiert die Drehmomentübertragungseinrichtung 10 um die Drehachse 15. Im idealen unbelasteten Zustand der Drehmomentübertragungseinrichtung 10 erfolgt im unbelasteten Zustand keine Verdrehung des Ausgangsteils 35 gegenüber dem Eingangsteil 40 (vgl. Figur 3). Die Verdrehung des Eingangsteils 40 zu dem Ausgangsteil 35 ist identisch der Verdrehung der Steuerscheibe 125 zu dem Betätigungselement und weist jeweils den gleichen Verdrehwinkel ϕ zueinander auf.

Wird ein Drehmoment M in die Drehmomentübertragungseinrichtung 10 eingeleitet, so wird das Drehmoment M über die Eingangsseite 16 durch den Pendelflansch 50 und die Eingangsscheibe 61, die mit dem Pendelflansch 50 gekoppelt ist, aufgenommen. Der Pendelflansch 50 und das Eingangsteil 61 liegen an einem ersten Längsende des Energiespeichers 75 an. Durch das zu übertragende Drehmoment M wird die Eingangsseite 16 gegenüber der Ausgangsseite 17 verspannt. Der Pendelflansch 50 und die Eingangsscheibe 61 drücken dabei gegen ein erstes Längsende des Energiespeichers 70 und komprimieren den Energiespeicher 70. Dadurch verdreht sich das Eingangsteil 40 gegenüber dem Ausgangsteil 35. Das Drehmoment M wird durch den Energiespeicher 75 weitergegeben und an einem zweiten Längsende des Energiespeichers 75 durch das Ausgangsteil 35 in die Nabe 20 und über die Welle-Nabe-Verbindung 25 in die Getriebeeingangswelle 30 weitergeleitet. Dabei verdrehen sich das Eingangsteil 40 gegenüber dem Ausgangsteil 35 direkt proportional zu dem zu übertragenden Drehmoment M. Der Verdrehwinkel ϕ der Verdrehung des Eingangsteils 40 gegenüber dem Ausgangsteil 35 ist dabei ein direktes Maß für das durch die Drehmomentübertragungseinrichtung 10 zu übertragende Drehmoment M.

Wird ein zeitlich schwankendes Drehmoment M als Drehschwingung in die Drehmomentübertragungseinrichtung 10 eingeleitet, so werden die Pendelmassen 95, 100 zum Schwingen entlang der Pendelbahn 115 angeregt. Dabei pendeln die Pendelmassen 95, 100 phasenversetzt zu dem Verlauf des schwankenden Drehmoments M. Die Pendelmassen 95, 100 stellen beim Pendeln ein Pendelmoment M_{P} bereit, das phasenversetzt zu dem Verlauf des schwankenden Drehmoments M ist und das schwankende Drehmoment zumindest teilweise tilgt. Ferner wird ein schwankendes Drehmoment M durch den Energiespeicher 75 zusätzlich getilgt, so dass an der Ausgangsseite 17 ein besonders gering schwankendes Drehmoment M der Getriebeeingangswelle 30 bereitgestellt werden kann.

In der Ausführungsform ist das Betätigungselement 130 mit der Eingangsseite 16 und die Steuerscheibe 125 mit der Ausgangsseite 17 verbunden.

In einem ersten Betriebszustand (vgl. Figur 3) liegt der erste Ringabschnitt 135 an dem ersten Steuerscheibenabschnitt 150 an. Ferner liegt der zweite Ringabschnitt 140 an dem zweiten Steuerscheibenabschnitt an. Die beiden Rampenabschnitte 145, 160 sind parallel zueinander ausgerichtet und um einen ersten Verdrehwinkel ϕ₁ beabstandet angeordnet. In dem ersten Betriebszustand ist die erste Reibfläche 181 in axialer Richtung beabstandet zu der zweiten Reibfläche 185 der ersten Pendelmasse 95.

In Abhängigkeit des durch die Drehmomentübertragungseinrichtung 10 zu übertragendem Drehmoments M verdreht sich die Steuerscheibe 125 gegenüber dem Betätigungselement 130. Wird dabei ein Drehmoment M übertragen, das wenigstens zu einer Verdrehung des Eingangsteils 40 gegenüber dem Ausgangsteil 35 um den ersten Verdrehwinkel ϕ₁ führt, tritt der erste Rampenabschnitt 145 in Berührkontakt mit dem zweiten Rampenabschnitt 160. Steigt das zu übertragende Drehmoment M weiter an, so wird die Steuerscheibe 125 durch die schräg angeordneten Rampenabschnitte 145, 160 axial in Richtung der ersten Pendelmasse 95 gedrückt. Dadurch wird der erste Ringabschnitt 135 von dem ersten Steuerscheibenabschnitt 150 getrennt, da der zweite Rampenabschnitt 160 am ersten Rampenabschnitt 145 entlang gleitet und in axialer Richtung gedrückt wird. Bei Überschreiten eines vordefinierten Schwellenwerts für das Drehmoment M, der mit einem zweiten Verdrehwinkel ϕ₂ korreliert, tritt die erste Reibfläche 181 in Berührkontakt mit der zweiten Reibfläche 185. Die beiden Reibflächen 181, 185 bauen einen Reibkontakt auf, wodurch die Pendelbewegung der Pendelmassen 95, 100 entlang der Pendelbahn 115 reduziert bzw. blockiert wird und das Fliehkraftpendel 19 in seiner Funktion deaktiviert wird. Dabei wird das durch die Pendelmassen 95, 100 erzeugte Pendelmoment über die Steuerscheibe 125 gegenüber dem Ausgangsteil 35 abgestützt. Dadurch kann vermieden werden, dass bei einem hohen Drehmoment M die Pendelmassen 95, 100 an weiteren nicht dargestellten Pendelmassen anschlagen oder der Abstandsbolzen 105 an der ersten Ausnehmung 110 anschlägt. Dadurch kann die Drehmomentübertragungseinrichtung 10 einen besonders leisen Fahrbetrieb gewährleisten.

Je nach Verdrehwinkel ϕ im zweiten Betriebszustand wird eine Anpresskraft F_{A}, mit der die erste Reibfläche 181 an die zweite Reibfläche 185 gepresst wird, festgelegt und die Pendelbewegung der Pendelmassen 95, 100 werden reduziert oder vollständig blockiert. Durch die Abstimmung der Erstreckung der Rampenabschnitte 160, 145 in Umfangsrichtung bzw. des Winkels ϕ kann die Anpresskraft, mit dem die erste Reibfläche 181 im zweiten Betriebszustand gegen die zweite Reibfläche 185 presst, auf einfache Weise konstruktiv eingestellt werden.

Presst die erste Reibfläche 181 gegen die zweite Reibfläche 185, wird rückseitig die erste Pendelmasse 95 auf der zum Pendelflansch 50 zugewandten Seite gegen den Pendelflansch 50 gedrückt, so dass die erste Pendelmasse 95 in ihrer Pendelbewegung entlang der Pendelbahn 115 gehindert bzw. blockiert ist. Die Blockierung wird von der ersten Pendelmasse 95 über den Abstandsbolzen 105 an die zweite Pendelmasse 100 weitergegeben.

Unterschreitet das zu übertragende Drehmoment M den vordefinierten Schwellenwert des Drehmoments M, so korrespondiert es mit einem Verdrehwinkel ϕ der Steuerscheibe 125 gegenüber dem Betätigungselement 130, der geringer ist als der zweite Verdrehwinkel ϕ₂. Der zweite Rampenabschnitt 60 gleitet wieder zurück entlang dem ersten Rampenabschnitt 140, sodass die Steuerscheibe 125 in Figur 1 wieder nach links verschoben und der Reibkontakt der beiden Reibflächen 181, 185 aufgehoben wird. Durch das ggf. zusätzlich vorgesehene Federelement 190 wird die Trennung der ersten Reibfläche 181 von der zweiten Reibfläche 185 sichergestellt.

Figur 6 zeigt ein Diagramm, wobei das zu übertragende Drehmoment M über dem Verdrehwinkel ϕ aufgetragen ist. Das Drehmoment M folgt dabei einer Kennlinie 200. Die Kennlinie 200 ist in der Ausführungsform geradlinig ausgebildet und weist eine stetige Steigung auf. Selbstverständlich ist auch denkbar, dass die Kennlinie 200 mehrstufig ausgebildet ist, also, wie beispielsweise in Figur 7 gezeigt, einen Knick aufweist.

Der vordefinierte Schwellenwert für das Drehmoment M entspricht, wie bereits oben erläutert, dem vordefinierten zweiten Verdrehwinkel ϕ₂. Im ersten Betriebszustand ist der Verdrehwinkel ϕ kleiner als der zweite Verdrehwinkel ϕ₂. In diesem Betriebszustand sind die Reibflächen 181, 185 voneinander getrennt, so dass die Pendelmassen 95, 100 ungehindert entlang der Pendelbahn 115 schwingen können. In diesem Bereich ist somit das Fliehkraftpendel 19 aktiv geschaltet. Durch die Kopplung der Tilgereigenschaften des Federdämpfers 18 und des Fliehkraftpendels 19 die Kennlinie 200 weist im ersten Betriebszustand einen ersten Kennlinienabschnitt 205 auf.

Überschreitet der Verdrehwinkel ϕ den zweiten Verdrehwinkel ϕ₂ bzw. überschreitet das zu übertragende Drehmoment M den vordefinierten Schwellenwert für das Drehmoment M, so werden, wie oben erläutert, die Reibflächen 181, 185 aneinandergedrückt und die Pendelbewegung des Pendelmassenpaars 90 gehemmt bzw. blockiert. Dadurch weist die Kennlinie 200 einen zweiten Kennlinienabschnitt 210 auf. Eine Dämpfung von im Drehmoment vorliegenden Drehmomentschwankungen erfolgt bei deaktiviertem Fliehkraftpendel 19 nun nur noch über den Federdämpfer 18 und den Wandler 60.

Figur 7 zeigt ein Diagramm, wobei das zu übertragende Drehmoment M über dem Verdrehwinkel ϕ aufgetragen ist. Das Verhalten der Drehmomentübertragungseinrichtung 10 im ersten Betriebszustand entspricht dem in Figur 6 beschriebenen Verhalten. Abweichend dazu weist die Kennlinie 200 einen zweiten Kennlinienabschnitt 210 auf, der eine andere Steigung hat als der erste Kennlinienabschnitt 205. Dadurch weist die Drehmomentübertragungseinrichtung 10 ein anderes Dämpferverhalten bei deaktiviertem Fliehkraftpendel 19 auf als bei aktiviertem Fliehkraftpendel 19. Dadurch eignet sich die Drehmomentübertragungseinrichtung 10 insbesondere für Verbrennungsmotoren mit Zylinderabschaltung, da durch die zweistufige Kennlinie 200, wie in Figur 7 gezeigt, eine Adaption der Drehmomentübertragungseinrichtung 10 an den jeweiligen Motorbetriebszustand auf einfache Weise erfolgen kann und die Drehmomentübertragungseinrichtung 10 auf einfache Weise bestmöglichst in ihrer Torsionsfederrate angepasst werden kann. Ferner wird vermieden, dass bei abgeschaltetem Zylinder das Fliehkraftpendel 19 nicht zu unerwünschten Eigenmoden angeregt werden kann, da das Fliehkraftpendel 19 in diesem Fall deaktiviert ist.

Es wird darauf hingewiesen, dass die in den Figuren 1 bis 7 gezeigte Schalteinrichtung 21 selbstverständlich auch andersartig ausgebildet werden kann. Wesentlich dabei ist, dass ein axialer Versatz der ersten Reibfläche 181 verdrehwinkelabhängig bzw. drehmomentabhängig erfolgt. So ist beispielsweise denkbar, anstatt der Rampenabschnitte 145, 160 eine Ausbuchtung an dem Betätigungselement 130 oder an der Steuerscheibe 125 vorzusehen.

### Bezugszeichenliste

- 10: Drehmomentübertragungseinrichtung
- 15: Drehachse
- 16: Eingangsseite
- 17: Ausgangsseite
- 18: Federdämpfer
- 19: Fliehkraftpendel
- 20: Nabe
- 21: Schalteinrichtung
- 25: Wellen-Nabe-Verbindung
- 30: Getriebeeingangswelle
- 35: Ausgangsteil
- 40: Eingangsteil
- 45: Turbine
- 50: Pendelflansch

- 60: Hydrodynamischer Wandler
- 61: Eingangsscheibe
- 65: Lasche
- 70: Retainer
- 75: Energiespeicher
- 80: Formschlüssige Verbindung
- 81: innere Umfangsfläche
- 85: äußere Umfangsfläche
- 90: Pendelmassenpaar
- 95: Erste Pendelmasse
- 100: Zweite Pendelmasse
- 105: Abstandsbolzen
- 110: Erste Ausnehmung
- 115: Pendelbahn
- 120: Kulissenführung
- 125: Steuerscheibe
- 130: Betätigungselement
- 135: Erster Ringabschnitt
- 140: Zweiter Ringabschnitt
- 145: Erster Rampenabschnitt
- 150: Erster Steuerscheibenabschnitt
- 155: Zweiter Steuerscheibenabschnitt
- 160: Zweiter Rampenabschnitt
- 161: Erster Steuerscheibenbereich
- 165: Zweiter Steuerscheibenbereich
- 170: Dritter Steuerscheibenbereich
- 175: Verbindung
- 179: Stiftabschnitt
- 180: Zweite Ausnehmung
- 181: Erste Reibfläche
- 185: Zweite Reibfläche
- 190: Federelement
- 200: Kennlinie
- 205: Erster Kennlinienabschnitt
- 210: Zweiter Kennlinienabschnitt

## Patentansprüche

1. Drehmomentübertragungseinrichtung (10) mit einem Federdämpfer (18) und einem Fliehkraftpendel (19),
- wobei die Drehmomentübertragungseinrichtung (10) drehbar um eine Drehachse (15) gelagert ist,
- wobei das Fliehkraftpendel (19) einen Pendelflansch (50) und wenigstens eine Pendelmasse (95, 100) aufweist,
- wobei die Pendelmasse (95, 100) mittels einer Kulissenführung (120) mit dem Pendelflansch (50) verbunden ist,
- wobei die Kulissenführung (120) eine Pendelbahn (115) der Pendelmasse (95, 100) vorgibt,
- wobei die Pendelmasse (95, 100) ausgebildet ist, entlang der Pendelbahn (115) zu pendeln
- wobei der Pendelflansch (50) drehmomentschlüssig mit dem Federdämpfer (18) verbunden ist,
- wobei der Federdämpfer (18) ausgebildet ist, ein Drehmoment zu übertragen
- wobei eine Schalteinrichtung (21) vorgesehen ist,
- wobei die Schalteinrichtung (21) mit dem Federdämpfer (18) gekoppelt ist, **dadurch gekennzeichnet, dass** die Schalteinrichtung (21) ausgebildet ist, bei Überschreiten eines vordefinierten Schwellenwerts des Drehmoments die Pendelbewegung der Pendelmasse (95, 100) entlang der Pendelbahn (115) zumindest teilweise zu reduzieren.

2. Drehmomentübertragungseinrichtung (10) nach Anspruch 1, **dadurch gekennzeichnet, dass** der Federdämpfer (18) ein Eingangsteil (40), einen Energiespeicher und ein Ausgangsteil (35) umfasst, wobei das Ausgangteil mittels des Energiespeichers verdrehbar um die Drehachse (15) mit dem Eingangsteil (40) gekoppelt ist, wobei das Eingangsteil (40) und das Ausgangsteil (35) mit der Schalteinrichtung (21) gekoppelt sind.

3. Drehmomentübertragungseinrichtung (10) nach Anspruch 1 oder 2, **dadurch gekennzeichnet, dass** die Schalteinrichtung (21) eine Steuerscheibe (125) und ein Betätigungselement (130) umfasst, wobei die Steuerscheibe (125) gegenüber dem Betätigungselement (130) verdrehbar um die Drehachse (15) angeordnet ist.

4. Drehmomentübertragungseinrichtung (10) nach Anspruch 3, **dadurch gekennzeichnet, dass** die Steuerscheibe (125) mit dem Eingangsteil (40) und das Betätigungselement (130) mit dem Ausgangsteil (35) verbunden ist, oder dass die Steuerscheibe (125) mit dem Ausgangsteil (35) und das Betätigungselement (130) mit dem Eingangsteil (40) gekoppelt ist.

5. Drehmomentübertragungseinrichtung (10) nach Anspruch 3 oder 4, **dadurch gekennzeichnet, dass**
- das Betätigungselement (130) auf einer der Steuerscheibe (125) zugewandten Stirnseite einen in Umfangsrichtung verlaufenden ersten Rampenabschnitt (145) und die Steuerscheibe (125) auf einer dem Betätigungselement (130) zugewandten Stirnseite einen in Umfangsrichtung verlaufenden zweiten Rampenabschnitt (160) umfasst,
- wobei bei Überschreiten des vordefinierten Schwellenwerts des Drehmoments der erste Rampenabschnitt (145) und der zweite Rampenabschnitt (160) ausgebildet sind, in Berührkontakt gebracht zu werden,
- wobei die Steuerscheibe (125) ausgebildet ist, bei Berührkontakt des ersten Rampenabschnitts (145) mit dem zweiten Rampenabschnitt (160) zumindest teilweise axial in Richtung der Pendelmasse (95, 100) bewegt zu werden, um in Reibkontakt mit der Pendelmasse (95, 100) zu treten und eine Pendelbewegung der Pendelmasse (95, 100) zumindest teilweise zu reduzieren.

6. Drehmomentübertragungseinrichtung (10) nach Anspruch 5, **dadurch gekennzeichnet, dass**
- das Betätigungselement (130) einen ersten Ringabschnitt (135) und einen zweiten Ringabschnitt (140) umfasst,
- wobei die beiden Ringabschnitte (135, 140) senkrecht in einer Ebene zur Drehachse (15) angeordnet sind,
- wobei der erste Ringabschnitt (135) axial zu dem zweiten Ringabschnitt (140) versetzt angeordnet ist,
- wobei in Umfangsrichtung zwischen dem ersten Ringabschnitt (135) und dem zweiten Ringabschnitt (140) der erste Rampenabschnitt (145) angeordnet ist.

7. Drehmomentübertragungseinrichtung (10) nach Anspruch 6, **dadurch gekennzeichnet, dass**
- die Steuerscheibe (125) einen ersten Steuerscheibenabschnitt (150) und einen zweiten Steuerscheibenabschnitt (155) umfasst,
- wobei die beiden Steuerscheibenabschnitte (150, 155) in einer Ebene senkrecht zur Drehachse (15) angeordnet sind,
- wobei der erste Steuerscheibenabschnitt (150) axial zu dem zweite Steuerscheibenabschnitt (155) versetzt angeordnet ist,
- wobei die Steuerscheibe (125) derart zu dem Betätigungselement (130) angeordnet ist, dass vor Überschreiten des vordefinierten Schwellenwerts des Drehmoments der erste Steuerscheibenabschnitt (150) an dem ersten Ringabschnitt (135) und der zweite Ringabschnitt (140) an dem zweiten Steuerscheibenabschnitt (155) anliegt.

8. Drehmomentübertragungseinrichtung (10) nach Anspruch 6 oder 7, **dadurch gekennzeichnet, dass** der erste Rampenabschnitt (145) und/oder der zweite Rampenabschnitt (160) schräg in einem spitzen Winkel gegenüber dem ersten und/oder zweiten Ringabschnitt (135, 140) und/oder dem ersten und/oder zweiten Steuerscheibenabschnitt (150, 155) angeordnet sind, wobei vorzugsweise der Winkel 5° bis 30°, insbesondere von 10° bis 20 °aufweist.

9. Drehmomentübertragungseinrichtung (10) nach einem der Ansprüche 3 bis 8, **dadurch gekennzeichnet, dass** die Steuerscheibe (125) auf einer der Pendelmasse (95, 100) zugewandten Seite eine erste Reibfläche (181) und die Pendelmasse (95, 100) auf der der Steuerscheibe (125) zugewandten Seite eine zweite Reibfläche (185) aufweist, wobei die beiden Reibflächen (181, 185) ausgebildet sind, bei Reibkontakt ein Pendelmoment der Pendelmasse (95, 100) gegenüber dem Federdämpfer (18) abzustützen.

10. Drehmomentübertragungseinrichtung (10) nach einem der Ansprüche 3 bis 9, **dadurch gekennzeichnet, dass** zwischen der Steuerscheibe (125) und dem Pendelflansch (50) ein Federelement (190) angeordnet ist, wobei das Federelement (190) ausgebildet ist, eine Trennkraft (F_{T}) zur axialen Beabstandung der Pendelmasse (95, 100) von der Steuerscheibe (125) bereitzustellen, wobei vorzugsweise das Federelement als Tellerfeder (190) ausgebildet ist.

11. Drehmomentübertragungseinrichtung (10) nach einem der Ansprüche 3 bis 10, **dadurch gekennzeichnet, dass**
- die Steuerscheibe (125) einen ersten Steuerscheibenbereich (161), einen zweiten Steuerscheibenbereich (165) und einen dritten Steuerscheibenbereich (170) aufweist,
- wobei die Steuerscheibenbereiche (161, 165, 170) miteinander verbunden sind,
- wobei der erste Steuerscheibenbereich (161) parallel zu der Drehachse (15) angeordnet ist,
- wobei der zweite Steuerscheibenbereich (165) in einer Ebene senkrecht zu der Drehachse (15) verlaufend angeordnet ist,
- wobei radial außenseitig der dritte Steuerscheibenbereich (170) angrenzend an den zweiten Steuerscheibenbereich (165) angeordnet ist,
- wobei der dritte Steuerscheibenbereich (170) in einer Ebene senkrecht zu der Drehachse (15) und axial versetzt zu dem zweiten Steuerscheibenbereich (165) angeordnet ist,
- wobei der dritte Steuerscheibenbereich (170) axial zwischen dem zweiten Steuerscheibenbereich (165) und der Pendelmasse (95, 100) angeordnet ist.

## Claims

1. Torque transmission device (10) having a spring damper (18) and a centrifugal force pendulum (19),
- the torque transmission device (10) being mounted such that it can be rotated about a rotational axis (15),
- the centrifugal force pendulum (19) having a pendulum flange (50) and at least one pendulum mass (95, 100),
- the pendulum mass (95, 100) being connected to the pendulum flange (50) by means of a slotted guide (120),
- the slotted guide (120) defining a pendulum track (115) of the pendulum mass (95, 100),
- the pendulum mass (95, 100) being configured to swing along the pendulum track (115),
- the pendulum flange (50) being connected to the spring damper (18) in a torque-transmitting manner,
- the spring damper (18) being configured to transmit a torque,
- a switching device (21) being provided,
- the switching device (21) being coupled to the spring damper (18),
**characterized in that**
the switching device (21) is configured to at least partially reduce the pendulum movement of the pendulum mass (95, 100) along the pendulum track (115) if a predefined threshold value of the torque is exceeded.

2. Torque transmission device (10) according to Claim 1, **characterized in that** the spring damper (18) comprises an input part (40), an energy store and an output part (35), the output part being coupled to the input part (40) by means of the energy store such that it can be rotated about the rotational axis (15), the input part (40) and the output part (35) being coupled to the switching device (21).

3. Torque transmission device (10) according to Claim 1 or 2, **characterized in that** the switching device (21) comprises a disc cam (125) and an actuating element (130), it being possible for the disc cam (125) to be arranged such that it can be rotated about the rotational axis (15) with respect to the actuating element (130).

4. Torque transmission device (10) according to Claim 3, **characterized in that** the disc cam (125) is connected to the input part (40), and the actuating element (130) is connected to the output part (35), or **in that** the disc cam (125) is coupled to the output part (35), and the actuating element (130) is coupled to the input part (40).

5. Torque transmission device (10) according to Claim 3 or 4, **characterized in that**
- the actuating element (130) comprises, on an end side which faces the disc cam (125), a first ramp section (145) which runs in the circumferential direction, and the disc cam (125) comprises, on an end side which faces the actuating element (130), a second ramp section (160) which runs in the circumferential direction,
- the first ramp section (145) and the second ramp section (160) being configured to be brought into touching contact if the predefined threshold value of the torque is exceeded,
- the disc cam (125) being configured, upon touching contact of the first ramp section (145) with the second ramp section (160), to be moved at least partially axially in the direction of the pendulum mass (95, 100), in order to enter into frictional contact with the pendulum mass (95, 100) and to at least partially reduce a pendulum movement of the pendulum mass (95, 100).

6. Torque transmission device (10) according to Claim 5, **characterized in that**
- the actuating element (130) comprises a first ring section (135) and a second ring section (140),
- the two ring sections (135, 140) being arranged perpendicularly in a plane with respect to the rotational axis (15),
- the first ring section (135) being arranged offset axially with respect to the second ring section (140),
- the first ramp section (145) being arranged between the first ring section (135) and the second ring section (140) in the circumferential direction.

7. Torque transmission device (10) according to Claim 6, **characterized in that**
- the disc cam (125) comprises a first disc cam section (150) and a second disc cam section (155),
- the two disc cam sections (150, 155) being arranged in a plane perpendicularly with respect to the rotational axis (15),
- the first disc cam section (150) being arranged offset axially with respect to the second disc cam section (155),
- the disc cam (125) being arranged with respect to the actuating element (130) in such a way that, before the predefined threshold value of the torque is exceeded, the first disc cam section (150) bears against the first ring section (135) and the second ring section (140) bears against the second disc cam section (155).

8. Torque transmission device (10) according to Claim 6 or 7, **characterized in that** the first ramp section (145) and/or the second ramp section (160) are/is arranged obliquely at an acute angle with respect to the first and/or second ring section (135, 140) and/or the first and/or second disc cam section (150, 155), the angle preferably being from 5° to 30°, in particular from 10° to 20°.

9. Torque transmission device (10) according to one of Claims 3 to 8, **characterized in that** the disc cam (125) has a first friction face (181) on a side which faces the pendulum mass (95, 100), and the pendulum mass (95, 100) has a second friction face (185) on the side which faces the disc cam (125), the two friction faces (181, 185) being configured to support a pendulum moment of the pendulum mass (95, 100) with respect to the spring damper (18) upon frictional contact.

10. Torque transmission device (10) according to one of Claims 3 to 9, **characterized in that** a spring element (190) is arranged between the disc cam (125) and the pendulum flange (50), the spring element (190) being configured to provide a separating force (F_{T}) for spacing the pendulum mass (95, 100) apart axially from the disc cam (125), the spring element preferably being configured as a cup spring (190).

11. Torque transmission device (10) according to one of Claims 3 to 10, **characterized in that**
- the disc cam (125) has a first disc cam region (161), a second disc cam region (165) and a third disc cam region (170),
- the disc cam regions (161, 165, 170) being connected to one another, the first disc cam region (161) being arranged parallel to the rotational axis (15),
- the second disc cam region (165) being arranged so as to run in a plane perpendicularly with respect to the rotational axis (15),
- the third disc cam region (170) being arranged radially on the outside so as to adjoin the second disc cam region (165),
- the third disc cam region (170) being arranged in a plane perpendicularly with respect to the rotational axis (15) and offset axially with respect to the second disc cam region (165),
- the third disc cam region (170) being arranged axially between the second disc cam region (165) and the pendulum mass (95, 100).

## Revendications

1. Dispositif de transfert de couple (10) comprenant un amortisseur à ressort (18) et un pendule à force centrifuge (19),
- le dispositif de transfert de couple (10) étant supporté de manière rotative de manière à pouvoir tourner autour d'un axe de rotation (15),
- le pendule à force centrifuge (19) présentant une bride de pendule (50) et au moins une masse de pendule (95, 100),
- la masse de pendule (95, 100) étant reliée à la bride de pendule (50) au moyen d'un guide à coulisse (120),
- le guide à coulisse (120) prédéfinissant une trajectoire de pendule (115) de la masse de pendule (95, 100),
- la masse de pendule (95, 100) étant réalisée de manière à osciller suivant un mouvement pendulaire le long de la trajectoire de pendule (115)
- la bride de pendule (50) étant reliée à l'amortisseur à ressort (18) par engagement par couple,
- l'amortisseur à ressort (18) étant réalisé de manière à transmettre un couple,
- un dispositif de commutation (21) étant prévu,
- le dispositif de commutation (21) étant accouplé à l'amortisseur à ressort (18), **caractérisé en ce que**
le dispositif de commutation (21) est réalisé pour réduire au moins en partie le mouvement pendulaire de la masse de pendule (95, 100) le long de la trajectoire de pendule (115) lors d'un dépassement d'une valeur seuil prédéfinie du couple.

2. Dispositif de transfert de couple (10) selon la revendication 1, **caractérisé en ce que** l'amortisseur à ressort (18) présente une partie d'entrée (40), un accumulateur d'énergie et une partie de sortie (35), la partie de sortie étant accouplée à la partie d'entrée (40) au moyen de l'accumulateur d'énergie de manière à pouvoir tourner autour de l'axe de rotation (15), la partie d'entrée (40) et la partie de sortie (35) étant accouplées au dispositif de commutation (21).

3. Dispositif de transfert de couple (10) selon la revendication 1 ou 2, **caractérisé en ce que** le dispositif de commutation (21) présente un disque de commande (125) et un élément d'actionnement (130), le disque de commande (125) étant disposé par rapport à l'élément d'actionnement (130) de manière à pouvoir tourner autour de l'axe de rotation (15).

4. Dispositif de transfert de couple (10) selon la revendication 3, **caractérisé en ce que** le disque de commande (125) est relié à la partie d'entrée (40) et l'élément d'actionnement (130) est relié à la partie de sortie (35), ou **en ce que** le disque de commande (125) est accouplé à la partie de sortie (35) et l'élément d'actionnement (130) est couplé à la partie d'entrée (40).

5. Dispositif de transfert de couple (10) selon la revendication 3 ou 4, **caractérisé en ce que**
- l'élément d'actionnement (130) présente, sur un côté frontal tourné vers le disque de commande (125), une première portion de rampe (145) s'étendant dans la direction périphérique et le disque de commande (125) présente, sur un côté frontal tourné vers l'élément d'actionnement (130), une deuxième portion de rampe (160) s'étendant dans la direction périphérique,
- la première portion de rampe (145) et la deuxième portion de rampe (160), lors du dépassement de la valeur seuil prédéfinie du couple, étant réalisées de manière à être amenées en contact,
- le disque de commande (125), lors du contact de la première portion de rampe (145) avec la deuxième portion de rampe (160), étant réalisé de manière à être déplacé au moins en partie axialement dans la direction de la masse de pendule (95, 100), afin de venir en contact de friction avec la masse de pendule (95, 100) et de réduire au moins en partie un mouvement pendulaire de la masse de pendule (95, 100).

6. Dispositif de transfert de couple (10) selon la revendication 5, **caractérisé en ce que**
- l'élément d'actionnement (130) comprend présente une première portion annulaire (135) et une deuxième portion annulaire (140),
- les deux portions annulaires (135, 140) étant disposées perpendiculairement dans un plan par rapport à l'axe de rotation (15),
- la première portion annulaire (135) étant disposée de manière décalée axialement par rapport à la deuxième portion annulaire (140),
- la première portion de rampe (145) étant disposée dans la direction périphérique entre la première portion annulaire (135) et la deuxième portion annulaire (140).

7. Dispositif de transfert de couple (10) selon la revendication 6, **caractérisé en ce que**
- le disque de commande (125) comprend une première portion de disque de commande (150) et une deuxième portion de disque de commande (155),
- les deux portions de disque de commande (150, 155) étant disposées dans un plan perpendiculairement à l'axe de rotation (15),
- la première portion de disque de commande (150) étant disposée de manière décalée axialement par rapport à la deuxième portion de disque de commande (155),
- le disque de commande (125) étant disposé par rapport à l'élément d'actionnement (130) de telle sorte qu'avant le dépassement de la valeur seuil prédéfinie du couple, la première portion de disque de commande (150) s'applique contre la première portion annulaire (135) et la deuxième portion annulaire (140) s'applique contre la deuxième portion de disque de commande (155).

8. Dispositif de transfert de couple (10) selon la revendication 6 ou 7, **caractérisé en ce que** la première portion de rampe (145) et/ou la deuxième portion de rampe (160) sont disposées obliquement suivant un angle aigu par rapport à la première et/ou à la deuxième portion annulaire (135, 140) et/ou à la première et/ou à la deuxième portion de disque de commande (150, 155), l'angle étant de préférence de 5° à 30°, en particulier de 10° à 20°.

9. Dispositif de transfert de couple (10) selon l'une quelconque des revendications 3 à 8, **caractérisé en ce que** le disque de commande (125) présente, sur un côté tourné vers la masse de pendule (95, 100), une première surface de friction (181) et la masse de pendule (95, 100) présente, du côté tourné vers le disque de commande (125), une deuxième surface de friction (185), les deux surfaces de friction (181, 185) étant réalisées de manière à supporter un couple pendulaire de la masse de pendule (95, 100) par rapport à l'amortisseur à ressort (18) lors du contact de friction.

10. Dispositif de transfert de couple (10) selon l'une quelconque des revendications 3 à 9, **caractérisé en ce qu'**entre le disque de commande (125) et la bride de pendule (50) est disposé un élément de ressort (190), l'élément de ressort (190) étant réalisé de manière à fournir une force de séparation (F_{T}) pour l'espacement axial de la masse de pendule (95, 100) du disque de commande (125), l'élément de ressort étant de préférence réalisé sous forme de ressort Belleville (190).

11. Dispositif de transfert de couple (10) selon l'une quelconque des revendications 3 à 10, **caractérisé en ce que**
- le disque de commande (125) présente une première région de disque de commande (161), une deuxième région de disque de commande (165) et une troisième région de disque de commande (170),
- les régions de disque de commande (161, 165, 170) étant reliées les unes aux autres,
- la première région de disque de commande (161) étant disposée parallèlement à l'axe de rotation (15),
- la deuxième région de disque de commande (165) étant disposée de manière à s'étendre dans un plan perpendiculairement à l'axe de rotation (15),
- la troisième région de disque de commande (170) étant disposée du côté radialement extérieur en position adjacente à la deuxième région de disque de commande (165),
- la troisième région de disque de commande (170) étant disposée dans un plan perpendiculairement à l'axe de rotation (15) et de manière décalée axialement par rapport à la deuxième région de disque de commande (165),
- la troisième région de disque de commande (170) étant disposée axialement entre la deuxième région de disque de commande (165) et la masse de pendule (95, 100).
